# EUROPÄISCHE PATENTSCHRIFT

(11) **EP 1 703 214 B1**
(45) Veröffentlichungstag und Bekanntmachung des Hinweises auf die Patenterteilung: **02.05.2018**
(21) Anmeldenummer: 06110763.7
(22) Anmeldetag: 07.03.2006
(51) Int. Cl.: F24D 3/14

(54) **Heiz- und/oder Kühlelement für eine ein Ständerwerk aufweisende Trockenbauwand**
Heating or cooling element for a dry wall comprising a framework
Elément de chauffage ou de réfrigération pour une cloison sèche avec ossature

(30) Priorität: 14.03.2005 DE 202005004216 U
(43) Veröffentlichungstag der Anmeldung: 20.09.2006
(73) Patentinhaber: Uponor Innovation AB, 73061 Virsbo (SE)
(72) Erfinder: Altmann, Maik, 97475 Zeil/Main (DE); Vogel, Thomas, 97357 Prichsenstadt (DE); Oing, Hermann, 48599 Gronau (DE); Claussen, Jörg, 48329 Havixbeck (DE)
(74) Vertreter: Epping - Hermann - Fischer

(56) Entgegenhaltungen:
- EP-A1- 0 769 659
- EP-A1- 1 444 465
- DE-A1- 4 031 483
- DE-A1- 19 503 196
- DE-A1- 19 909 391
- DE-U1- 29 608 709
- US-A1- 2004 026 525

## Beschreibung

Die Erfindung betrifft eine Anordnung zum Kühlen oder Heizen sowie eine Trockenbauwand, die ein Ständerwerk aufweist.

Auf dem Gebiet der Kühl- und/oder Flächenheizungen ist es bekannt, ein von einem temperierbaren Medium durchströmbares Rohr an einem wärmeleitenden Trägerelement anzuordnen, das aufgrund des Wärmekontakts mit dem Rohr von diesem erwärmt bzw. abgekühlt wird und dadurch die Umgebung temperiert. Derartige Trägerelemente bestehen zumeist aus dünnen Metallplatten, in denen Sicken ausgebildet sind, die der (vollständigen) Aufnahme der Rohre dienen. Die deutsche Offenlegungsschrift DE 199 09 391 A1 zeigt eine Anordnung zum Kühlen oder Heizen, aufweisend ein Ständerwerk für eine Trockenbauwand mit zumindest zwei Vertikalstreben und mit einer Flächenheizung mit einem von einer Heiz- oder Kühlflüssigkeit durchströmten Rohr, wobei das Rohr auf einem Wärmeleitblech befestigt ist.

Das Wärmeleitblech der Flächenheizung wird an die Vertikalstreben des Ständerwerks verbindenden Querträgern befestigt.

Die DE 199 09 391 A1 offenbart den Oberbegriff des unabhängigen Anspruchs 1. Aus der EP 0 769 659 A1 ist ein Kontaktelement für eine Heiz- und Kühldecke mit mindestens einer von einem Wärmeträgermedium durchströmten Führung sowie mindestens einer von der Kontaktplatte, welche mit der mindestens einen Führung in wärmeleitender Verbindung steht, gebildeten Kontaktfläche offenbart. Das Kontaktelement ist dadurch gekennzeichnet, dass die Kontaktfläche eine von mindestens einer flachen Klebevertiefung zur Aufnahme eines Klebemittels gebildete Klebefläche umfasst.

Werden derartige Flächentemperiersysteme im Trockenbau angewendet, so müssen die Trägerelemente an dem Ständerwerk der Trockenbauwand befestigt werden. Dies erfolgt zumeist durch Verschraubung oder dergleichen. Anschließend wird dann die Wandbeplankung aufgebracht, und zwar ebenfalls mittels in das Ständerwerk eingebrachte Schrauben. Dieser Prozess ist relativ aufwendig.

Der Erfindung liegt die Aufgabe zugrunde, eine Anordnung sowie eine Trockenbauwand mit einem Heiz- und/oder Kühlelement für den Trockenbau zu schaffen, dessen Handhabung bei der Montage vereinfacht ist.

Zur Lösung dieser Aufgabe wird mit der Erfindung eine Anordnung zum Kühlen oder Heizen vorgeschlagen, die ein Ständerwerk für eine Trockenbauwand und zumindest ein Heiz- und/oder Kühlelement für eine ein Ständerwerk aufweisende Trockenbauwandaufweist, wobei
- das Ständerwerk zumindest zwei Vertikalstreben aufweist,
- das Heiz- und/oder Kühlelement ein Rohr, das von einem temperierbaren Medium durchströmbar ist, und ein wärmeleitendes Trägerelement für das Rohr aufweist,
- wobei das Trägerelement zwei Klebestreifen an einer dem Ständerwerk zugeordneten Seite des Trägerelements aufweist, wobei ein Mittenabstand der Klebestreifen im Wesentlichen gleich dem Mittenabstand zweier benachbarter Vertikalstreben des Ständerwerks der Trockenbauwand ist, wobei das Trägerelement mittels der Klebestreifen an den Vertikalstreben fixiert ist.

Sinngemäß ist also vorgesehen, dass das Trägerelement zwei Klebestreifen aufweist, mit dem sich das Trägerelement an dem Ständerwerk der Trockenbauwand fixieren lässt. Wird dann anschließend die Wandbeplankung aufgebracht, so wird mit deren Befestigungsschrauben gleichzeitig auch das Trägerelement am Ständerwerk befestigt. Dadurch reduziert sich der Aufwand bezüglich der Fixierung des Trägerelements am Ständerwerk.

Der Erfindung liegt also die Idee zugrunde, die Vorarbeiten für die Montagetechnik zu reduzieren und eine einfache und schnelle Montage zu ermöglichen. Dazu wird das Heiz- und/oder Kühlelement mittels Klebetechnik (vorzugsweise durch ein aufgebrachtes doppelseitiges Klebeband) fixiert. Die endgültige Befestigung erfolgt bei der Montage der Wandbeplankung mittels handelsüblicher (Trockenbau-)Schrauben. Dabei wird zuerst die Wandbeplankung und anschließend das an dem Ständerwerk anliegende Heiz- und/oder Kühlelement sowie die Klebeschicht (bzw. das Klebeband) und alsdann das Ständerwerk durchschraubt. Die Klebeverbindung kann zweckmäßigerweise dünnschichtig und/oder großflächig ausgeführt sein.

In vorteilhafter Weiterbildung der Erfindung ist vorgesehen, dass das Trägerelement als Panel ("Blech") ausgebildet ist, in das mindestens eine Sicke eingebracht ist, die der Aufnahme des Rohres dient. Derartige Wärmeleitbleche aus beispielsweise Aluminium sind leichtgewichtig. Ein weiterer Vorteil ist, dass das Trägerelement in denjenigen Bereichen, in denen es an dem Ständerwerk anliegt, nicht allzu stark auftragen sollte, da gegen das Trägerelement die Wandbeplankung gesetzt wird. Durch die Verwendung eines durchgängig dünnen Trägerelements in Form eines Bleches ist dieser Vorzug gegeben, ohne dass es im Auflagerandbereich des Trägerelements spezieller Maßnahmen zur Verringerung der Dicke des Trägerelements bedarf.

Die Breite des Trägerelements ist entsprechend dem Abstand der Streben des Ständerwerks gewählt. An gegenüberliegenden Seiten weist das Trägerelement seine Anlageränder zur Anlage an den Streben des Ständerwerks auf. In jedem dieser Anlageränder ist ein Klebestreifen angeordnet.

In vorteilhafter Weiterbildung der Erfindung ist ferner vorgesehen, dass der bzw. jeder Klebestreifen eine Klebeschicht und einen diese bedeckenden Abziehfolienstreifen aufweist. Somit ist die Kleberschicht geschützt und wird vor Ort erst dann freigelegt, wenn das Trägerelement bei der Montage an dem Ständerwerk fixiert werden muss.

Die Erfindung wird nachfolgend anhand der Zeichnung näher erläutert.

Im Einzelnen zeigen:
- Fig. 1: eine perspektivische Darstellung eines Heiz- und/oder Kühlelements gemäß einem bevorzugten Ausführungsbeispiel der Erfindung,
- Fig. 2: eine perspektivische Ansicht zur Verdeutlichung der Vormontage des Heiz- und/oder Kühlelements und
- Fig. 3: einen Horizontalschnitt durch eine Vertikalstrebe des Ständerwerks mit an dieser durch Verschraubung befestigten Wandbeplankung und Heiz- und/oder Kühlelement.

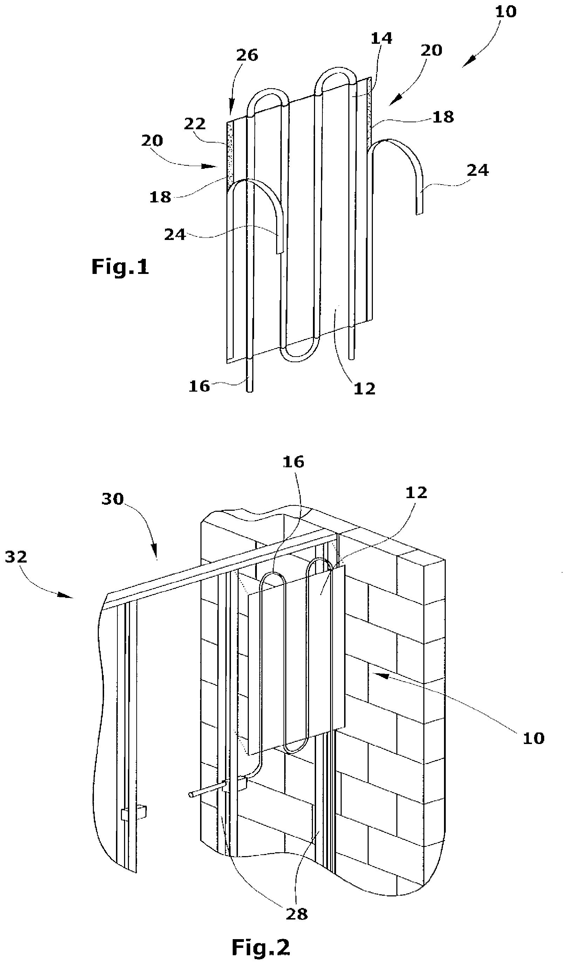

Fig. 1 zeigt in perspektivischer Ansicht ein Heiz- und/oder Kühlelement 10, wie es erfindungsgemäß Anwendung im Trockenbau findet. Das Element 10 weist ein als Panel ausgebildetes Trägerelement 12 aus einem wärmeleitenden Material, insbesondere Metall, wie beispielsweise Aluminium auf, das als dünne Platte ausgebildet ist. Das plattenförmige Trägerelement 12 weist mehrere Sicken 14 auf, durch die sich Rillen bilden, in denen Abschnitte eines Rohres 16 aufgenommen sind. Die Tiefe der Rillen ist mindestens gleich dem Außendurchmesser des aufgenommenen Rohres 16. In diesem Ausführungsbeispiel verlaufen die Sicken 14 parallel zu den Längsrändern 18 des Trägerelements; ein davon abweichender Verlauf der Sicken 14 ist ebenfalls möglich.

Längs der Längsränder 18 des Trägerelements 12 erstrecken sich Klebestreifen 20, die eine streifenförmige Klebeschicht 22 und einen Abziehfolienstreifen 24 umfassen.

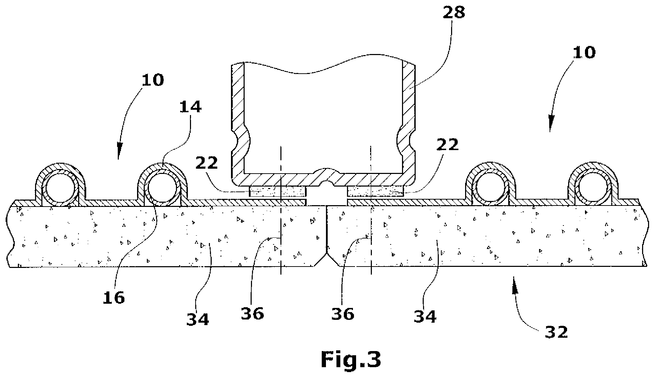

Wie anhand von Fig. 2 zu erkennen ist, wird das Heiz- und/oder Kühlelement mit seinen mit der Klebeschicht 22 versehenen Anlagerandbereichen 26 an zwei benachbarten (Vertikal-)Streben 28 des Ständerwerks 30 einer Trockenbauwand 32 (siehe auch Fig. 3) fixiert. Nachdem auf diese Weise das Ständerwerk 30 in den gewünschten Bereichen mit Elementen 10 versehen ist, erfolgt das Anbringen der Wandbeplankung in Form von beispielsweise Gipskartonplatten 34 (siehe Fig. 3). Diese Gipskartonplatten 34 werden mittels in Fig. 3 bei 36 angedeuteten handelsüblichen Trockenbauschrauben an den Vertikalstreben 28 befestigt. Dabei erfolgt zugleich auch die Befestigung der Elemente 10 durch diese Schrauben.

## Patentansprüche

1. Anordnung zum Kühlen oder Heizen, aufweisend ein Ständerwerk (30) für eine Trockenbauwand (32) und zumindest ein Heiz- und/oder Kühlelement (10); wobei
- das Ständerwerk (30) zumindest zwei Vertikalstreben (28) aufweist,
- das Heiz- und/oder Kühlelement (10) ein Rohr (16), das von einem temperierbaren Medium durchströmbar ist, und ein wärmeleitendes Trägerelement (12) für das Rohr (16) aufweist, **dadurch gekennzeichnet, dass** das Trägerelement (12) zwei Klebestreifen (20) an einer dem Ständerwerk (30) zugeordneten Seite des Trägerelements (12) aufweist, wobei ein Mittenabstand der Klebestreifen (20) im Wesentlichen gleich dem Mittenabstand zweier benachbarter Vertikalstreben (28) des Ständerwerks (30) der Trockenbauwand (32) ist, wobei das Trägerelement (12) mittels der Klebestreifen (20) an den Vertikalstreben (28) fixiert ist.

2. Anordnung nach Anspruch 1, **dadurch gekennzeichnet, dass** das Trägerelement (12) als ein Panel mit mindestens einer in das Panel eingebrachten Sicke (14) zur Aufnahme des Rohres (16) ausgebildet ist.

3. Anordnung nach Anspruch 1 oder 2, **dadurch gekennzeichnet, dass** jeder Klebestreifen (20) eine Klebeschicht (22) und einen diese bedeckende Abziehfolienstreifen (24) aufweist.

4. Trockenbauwand (32), aufweisend eine Anordnung nach einem der Ansprüche 1 bis 3.

5. Trockenbauwand (32) nach Anspruch 4, aufweisend eine Wandbeplankung, die mittels Befestigungsschrauben derart mit dem Ständerwerk (30) befestigt ist, dass gleichzeitig das Trägerelement (12) am Ständerwerk (30) befestigt ist.

6. Trockenbauwand (32) nach Anspruch 5, wobei die Wandbeplankung zumindest eine Gipskartonplatte (34) umfasst und die Befestigungsschrauben Trockenbauschrauben sind.

## Claims

1. An assembly for heating or cooling, comprising a stand unit (30) for a drywall (32) and at least one heating and/or cooling element (10); wherein
- the stand unit (30) comprises at least two vertical struts (28),
- the heating and/or cooling element (10) comprises a tube (16), that can be flown-trough by a temperature-adjustable fluid, and a heat-conducting support element (12) for the tube (16),
**characterized in that**
the support element (12) comprises two adhesive strips (20) on a side of the support element (12) assigned to the stand unit (30), wherein a medium distance of the adhesive strips (20) is essentially equal to the medium distance of two neighboring vertical struts (28) of the stand unit (30) of the drywall (32), wherein the support element (12) is fixed to the vertical struts (28) by means of the adhesive strips (20).

2. The assembly according to claim 1, **characterized in that** the support element (12) is formed as a panel having at least one corrugation (14) formed in the panel for receiving the tube (16).

3. The assembly according to claim 1 or 2, **characterized in that** each adhesive strip (20) comprises an adhesive layer (22) and a pull-off film strip (24) covering this layer.

4. A drywall (32), comprising an assembly according to one of claims 1 to 3.

5. The drywall (32) according to claim 4, comprising a wall paneling which is fastened to the stand unit (30) by means of fastening screws in such a way, that the support element (12) is fastened to the stand unit (30) at the same time.

6. Drywall (32) according to claim 5, wherein the wall paneling includes at least one gypsum board (34) and the fastening screws are drywall screws.

## Revendications

1. Agencement destiné au refroidissement ou au chauffage, comprenant une ossature (30) pour une cloison sèche (32) et au moins un élément de chauffage et/ou de refroidissement (10) ; dans lequel
- l'ossature (30) présente au moins deux étais verticaux (28),
- l'élément de chauffage et/ou de refroidissement (10) présente un tube (16) à travers lequel un milieu thermo-réglable peut s'écouler, et un élément de support (12) thermoconducteur pour le tube (16),
**caractérisé en ce que**
l'élément de support (12) présente deux bandes adhésives (20) sur un côté de l'élément de support (12) assigné à l'ossature (30), un espacement central des bandes adhésives (20) étant sensiblement égale à l'espacement central de deux étais verticaux adjacents (28) de l'ossature (30) de cloison sèche (32), l'élément de support (12) étant fixé au moyen des bandes adhésives (20) sur les étais verticaux (28).

2. Agencement selon la revendication 1, **caractérisé en ce que** l'élément de support (12) est conçu sous la forme d'un panneau comportant au moins une moulure (14) introduite dans le panneau et destinée à recevoir le tube (16).

3. Agencement selon la revendication 1 ou 2, **caractérisé en ce que** chaque bande adhésive (20) présente une couche adhésive (22) et une bande de film décollable (24) la recouvrant.

4. Cloison sèche (32), présentant un agencement selon l'une quelconque des revendications 1 à 3.

5. Cloison sèche (32) selon la revendication 4, présentant un revêtement mural, qui est fixé à l'ossature (30) au moyen de vis de fixation de manière à fixer en même temps l'élément de support (12) au niveau de l'ossature (30).

6. Cloison sèche (32) selon la revendication 5, dans laquelle le revêtement mural comprend au moins une plaque de plâtre (34) et les vis de fixation sont des vis pour cloison sèche.
